# EUROPEAN PATENT APPLICATION

(11) **EP 1 681 560 A1**
(43) Date of publication of application: **19.07.2006**
(21) Application number: 05270088.7
(22) Date of filing: 08.12.2005
(51) Int. Cl.: G01N 23/20

(54) **X-Ray Detection System**

(30) Priority: 14.01.2005 US 36592
(71) Applicant: Bede Scientific Instruments Limited, Durham DH1 1TW (GB)
(72) Inventor: Bowen, David Keith, CV34 5TD, Warwick (GB); Feichtinger, Petra, 5270, Mauerkirchen (AT); Wormington, Matthew, CO 80130, Littleton (US)
(74) Representative: Jones, Keith William

(57) **Abstract**

An x-ray detection system (400) for detecting a deflected X-ray beam (206) from a sample (204) comprising a detector (402) having an array of pixels enabled to receive the X-ray beam area at the detector (402), a image processing means (404) for reading out a sample image from the detector (402) and a region of interest extraction means (406, 408) for extracting a sub-image of a first area from the sample image. The sub-image is typically a narrow strip of the array of pixels to obtain a "virtual slit" image or a circular area of the array of pixels to obtain a "virtual aperture" image. More than one sub-image may be extracted from the sample image taken from the detector (402).

## Description

### Technical Field

The present invention relates to an X-ray detection system.

### Background

Typically, an X-ray measurement device includes an X-ray source and an X-ray detector. The X-ray source may have X-ray optics to form an X-ray beam which is then directed towards a sample, which is the object of the measurements. The detector may be positioned to receive diffracted or specular X-rays depending on the measurement required. In most types of measurements, a physical slit or aperture is required before the X-ray detector to limit the angle or area of the X-ray beam that is scattered from the sample. There are two main reasons for having a slit or aperture:
1. Different information is contained in different angular regions or different areas, and it is necessary to distinguish these; and
2. Spurious scatter from, for example, the beam striking surfaces of the equipment, gives artifacts in the data, which must be eliminated.

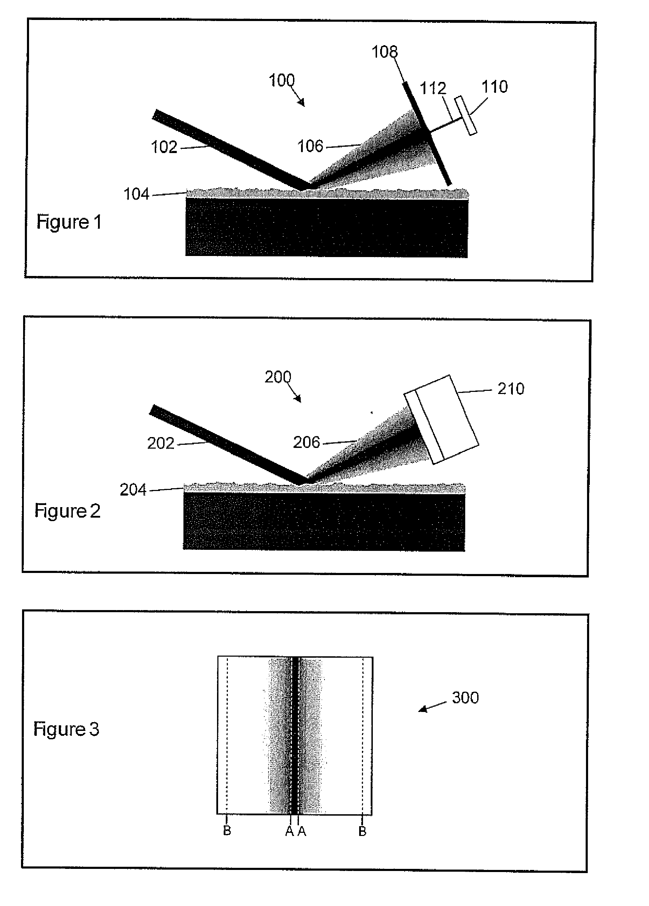

An example of a prior art X-ray reflectivity measurement system 100 is shown in Fig. 1. An incident X-ray beam 102 is directed towards a sample 104. The incident X-ray beam 102 is deflected from the sample 104, forming a reflected X-ray beam 106. A mechanical, small aperture, slit 108 is positioned in front of a detector 110. The slit 108 separates, from the deflected X-ray beam 106, a specular X-ray beam 112.

The deflected X-ray beam 106 contains additional information from the sample 104 from that contained in the specular X-ray beam 112. This additional information is contained within the diffuse scatter around the specular X-ray beam 112 and requires the detector 110 and slit 108 to be repositioned to enable measurement by a separate scan.

Furthermore, it is often difficult to decide on the slit or aperture size before performing an X-ray measurement. Factors that must be taken into consideration when selecting an appropriate slit or aperture size include intensity, resolution and signal to noise ratio.

### Summary of the invention

According to a first aspect of the present invention there is provided an X-ray detection system for detecting a deflected X-ray beam from a sample comprising:
an imaging detector;
an image processing means for reading out a sample image from the detector;
a region of interest extraction means for extracting a sub-image of a first area from the sample image.

Preferably, the sub-image is a stripe.

Typically, a stripe is a substantially rectangular portion of the sample image. For example, for a digital sample image made up of pixels, a stripe may be extracted by selecting a number of columns of adjacent pixels.

Alternatively, the sub-image is a curved stripe.

A curved stripe may be required with the use of certain microfocus sources when placed close to the sample.

Further alternatively, the sub-image is a substantially circular portion.

When the sub-image is a stripe the x-ray detection means is representing a "virtual" slit and, when the sub-image is a circular portion, the x-ray detection means is representing a "virtual" aperture.

Preferably, the x-ray detection system further comprises an image analysis means, wherein the sub-image is analysed according to one or more algorithms.

Preferably, the image analysis means is enabled to instruct the region of interest extraction means to extract a further sub-image of a second area from the sample image.

Preferably, the detector comprises an array or matrix of pixels.

Preferably, the detector is a Charge Coupled Device (CCD) image sensor suitable for X-rays.

According to a second aspect of the invention there is provided a method of detecting a deflected X-ray beam from a sample comprising the steps of:
capturing the deflected X-ray beam in the form of a sample image;
extracting a sub-image corresponding to a region of interest from the sample image.

According to a third aspect of the present invention there is provided a x-ray measurement system for measurement of a sample comprising:
an X-ray source, the source directing an X-ray beam towards the sample; and
an X-ray detection means according to the first aspect of the invention for receiving a deflected X-ray beam from the sample.

Preferably, the X-ray measurement system is an X-ray topographic, reflectometer or diffractometer system.

### Brief description of the drawings

Embodiments of the present invention will now be described with reference to the accompanying drawings, in which;
Fig. 1 illustrates a prior art X-ray measurement system;
Fig. 2 illustrates an embodiment of an X-ray measurement system incorporating an X-ray detection system according to the present invention;
Fig. 3 illustrates encoding of a sample image according to the present invention;
Fig. 4 illustrates a flow diagram of an x-ray detection system according to the present invention;
Fig. 5 illustrates an X-ray topographic scan using a X-ray detection system according to the present invention with a region of interest 10 pixels wide; and
Fig. 6 illustrates an X-ray topographic scan using a X-ray detection system according to the present invention with a region of interest 50 pixels wide.

### Detailed description of the invention

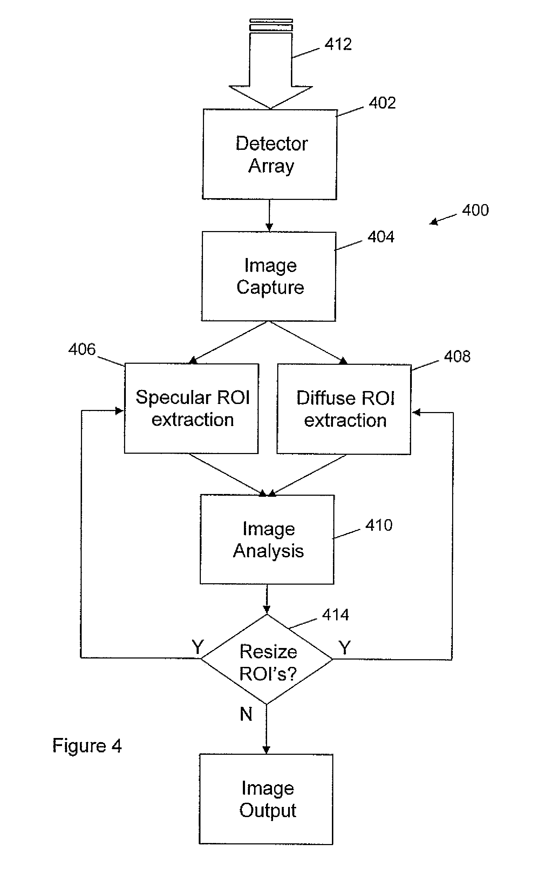

Referring to Fig. 2, an X-ray measurement system 200 is shown. The system 200 includes an X-ray source (not shown), which produces an X-ray beam 202 directed towards a sample 204. The X-ray beam 202 is deflected from the sample 204 producing a deflected X-ray beam 206. A detector array 210 receives the X-ray beam 206 and records a sample image (Fig. 3, 300), which is extracted by image processing means (Fig. 4, 404).

The detector array 210 may be any suitable imaging device, such as an X-ray sensitive CCD (Charge Coupled Device) with suitable signal to noise ratio and dynamic range capability.

The sample image 300 is acquired by the image processing means of the combined data, which, in general, will contain both specular and diffuse data.

The sample image 300 is then processed digitally to extract information. The specular or elastic scattered data is found by integrating a vertical stripe between points A-A.

The positions of the points A are decided on processing the acquired data, not before the experiment is made, and may be altered as often as required in order to find the optimum dimensions of the stripe, without requiring additional X-ray measurements.

The diffuse scatter lies between points A and B on either side of the vertical slice A-A. It may be integrated totally to measure the total diffuse scatter (TDS) or integrated in narrow strips to obtain a plot of the diffuse scatter against angular position.

Consequently, we obtain a set of "virtual" slits that are independent of instrument settings. The "virtual slit" size may be altered after the sample image 300 has been acquired. Furthermore, the sample image 300 may be processed as often as required, using different slit sizes, to obtain the optimum information.

The above examples describe the use of slits and virtual slits to obtain stripes of data related to a sample. In certain X-ray measurements, a small area, such as a circle, is illuminated by the X-rays rather than a stripe through the use of an aperture. Identical principles apply to the construction of a "virtual" aperture from the sample image.

Furthermore, in the X-ray measurement system 200 the detector 210 is positioned to receive the deflected X-ray beam 206 specularly. The X-ray detection system of the present invention is equally applicable to X-ray measurements where the X-ray beam is diffracted and the detector is positioned on either the same or on the opposite side of the sample from the X-ray generator. That is, the detector 210 can equally employed for transmission measurements.

Referring to Fig. 4, an X-ray detection system 400 comprises a detector array 402 an image processing means 404 a specular ROI (Region of Interest) extraction means 406, a diffuse ROI extraction means 408 and an image analysis means 410.

In use, an X-ray beam 412 is received by the detector array 402 and a sample image, such as that shown in Fig. 3, is captured by the image processing means 404. In this example, the specular ROI extraction means extracts a sub-image from the sample image equivalent to the vertical slice A-A of Fig. 3. The diffuse ROI extraction means extracts sub-images from the sample image equivalent to slices A-B either side of the vertical slice A-A. The image analysis means 410 analyses the sub-images and, if necessary, requests alternative sub-images to be extracted by modifying the size or shape of the ROI (that is, the dimensions of the vertical slice A-A) through a resize command. Once the image analysis means 410 has optimised the sub-images they are displayed or saved by an image output means 416.

A particular case arises when using a microfocus X-ray source, such as the microsource® X-ray source, close to the sample. The stripe obtained from the specimen is significantly curved when measured on a flat detector. The curvature may be calculated from geometric diffraction principles and is a conic section (the "Bragg conic"). If a physical slit is used, it also has to be curved and the curvature has to match that of the conic. Use of a virtual slit is far simpler, since the "curvature" is performed in the definition of the Region Of Interest (ROI) in the image integration. The virtual slit is thus significantly simpler than a variable-curvature mechanical slit.

In the digital X-ray topography system known as BedeScan^{™} (US Patent No. 6,782,076), data are acquired on an imaging detector and subsequently processed to form a full image. Use of the X-ray detection system according to the present invention means that a topographic scan may be reconstructed in different ways, to emphasize different aspects of the specimen.

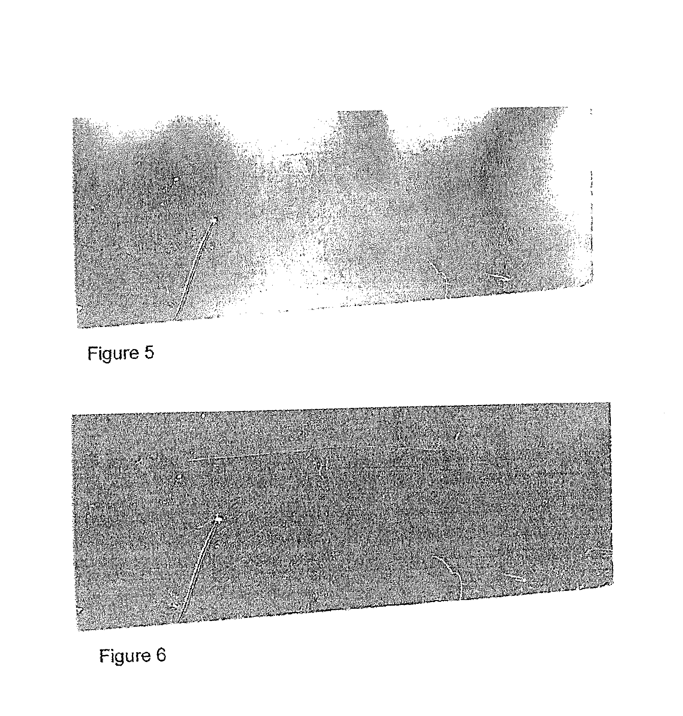

Referring to Fig. 5, a topographic scan of a sample is shown obtained from an X-ray detection system according to the present invention with a narrow virtual slit (ROI 10 pixels wide). This narrow virtual slit produces a topographic scan that is very sensitive to orientation contrast. Fig. 6 shows a topographic scan of the same sample, again using the X-ray detection system according to the present invention, with a broad virtual slit 50 pixels wide. With a broader virtual slit, the orientation contrast is suppressed but other defect contrast is more visible.

In high resolution X-Ray diffraction, the x-ray detection system of the present invention has application to improving the repeatability and throughput of a semiconductor metrology system, typically for measuring thickness and composition of epitaxial layers.

A typical measurement uses a slit-limited metrology detector scanning at twice the rate of the sample (an omega- 2theta scan). A slit-limited detector is a detector whose sensitive region of data acquisition is defined by a mechanical slit, that is, a mechanical slit is placed in front of the X-ray detector. The slit has to be narrowed enough to obtain good enough signal to noise ratio for the scan, but this loses intensity and gives worse throughput. Throughput is the total time of data acquisition (plus overheads, e.g. change of specimen).

Use of the x-ray detection system of the present invention means that an algorithm can be employed that progressively reduces the slit setting in post processing of data, until the optimum repeatability is obtained. This can be gauged by the "Goodness of Fit" reported by an automatic fitting algorithm, such as the Genetic Algorithm software, US Patent No. 6,192,103.

A further example is in the use of an area detector to gather triple-axis reciprocal space data. Information on triple-axis reciprocal space data can be found in "High resolution X-Ray diffractometry and topography", D.K. Bowen and B.K. Tanner, Taylor & Francis, London, 1998, chapter 7. This can usefully be post-processed to show reciprocal space maps at different resolutions, by use of a virtual aperture on the detector.

In X-ray powder diffraction, replacement of a mechanical slit by the X-ray detection means of the present invention allows an infinitely variable receiving slit to be synthesized. Data may be post-processed to give either high resolution or high intensity in the peaks.

In X-ray reflectivity, the specular and diffuse scatter may be separated but measured simultaneously. In this case the virtual slit width is set to match the incident beam properties.

Improvements and modifications may be incorporated without departing from the scope of the present invention.

## Claims

1. An X-ray detection system for detecting a deflected X-ray beam from a sample comprising:
an imaging detector;
an image processing means for reading out a sample image from the detector; and
a region of interest extraction means for extracting a sub-image of a first area from the sample image.

2. A detection system as claimed in claim 1, wherein the sub-image is a stripe.

3. A detection system as claimed in claim 1, wherein the sub-image is a curved stripe.

4. A detection system as claimed in claim 1, wherein the sub-image is a substantially circular portion.

5. A detection system as claimed in claim 1, wherein the x-ray detection system further comprises an image analysis means, wherein the sub-image is analysed according to one or more algorithms.

6. A detection system as claimed in claim 1, wherein the image analysis means is enabled to instruct the region of interest extraction means to extract a further sub-image of a second area from the sample image.

7. A detection system as claimed in claim 1, wherein the detector comprises an array or matrix of pixels.

8. A method of detecting a deflected X-ray beam from a sample comprising the steps of:
capturing the deflected X-ray beam in the form of a sample image;
extracting a sub-image corresponding to a region of interest from the sample image.

9. A x-ray measurement system for measurement of a sample comprising:
a X-ray source, the source directing an X-ray beam towards the sample; and
a X-ray detection system as claimed in claim 1 for receiving a deflected X-ray beam from the sample.

10. A measurement system as claimed in claim 9, wherein the X-ray measurement system is an X-ray topographic, reflectometer or diffractometer system.
